# EUROPEAN PATENT SPECIFICATION

(11) **EP 2 561 762 B1**
(45) Date of publication and mention of the grant of the patent: **25.03.2015**
(21) Application number: 10850152.9
(22) Date of filing: 14.12.2010
(51) Int. Cl.: A22C 25/16, A22C 25/17

(54) **TUNA SKINNING MACHINE**
HÄUTUNGSMASCHINE FÜR TUNFISCH
MACHINE DE PELAGE DE THONS

(30) Priority: 21.04.2010 ES 201030582
(43) Date of publication of application: 27.02.2013
(73) Proprietor: Juaristi Ureta, Francisco Javier, 48370 Bermeo (Vizcaya) (ES)
(72) Inventor: Juaristi Ureta, Francisco Javier, 48370 Bermeo (Vizcaya) (ES)
(74) Representative: De Pablos Riba, Julio
(86) International application number: PCT/ES2010/070819
(87) International publication number: WO 2011/131805

(56) References cited:
- WO-A1-91/12725
- ES-A1- 421 872
- JP-A- H11 225 666
- JP-A- 2004 254 660
- US-A- 2 020 579
- US-A- 2 345 607
- US-A- 2 565 727
- US-A- 5 197 916
- US-A- 5 197 916

## Description

### OBJECT OF THE INVENTION

The present invention relates to a machine specially intended for the automatic skinning of the tuna, particularly tuna, Skipjack tuna and other fish of considerable importance for the canning industry.

The object of the invention is to get a machine with optimal results in what regards to the skinning of the tuna, with parallel removal of the dark meat of the same and with high production rate, derived from a "continuous" work of said machine.

The invention therefore lies in the field of industrial machinery specifically intended for the canning industry.

### BACKGROUND OF THE INVENTION

As known, the tuna have high muscular activity as a result of which their flesh is compact and pink, being even red in some species, with the exception of certain parts close to their spine, commonly referred to as dark meat, which have to be disposed of both for its appearance and its taste, particularly when the fish are intended for the canning industry, in which case it is also necessary to remove their skin, for obvious reasons.

Today the removal of both the skin and the dark meat is carried out manually, with the help of a knife, which involves the participation of a very important labor force in the processing of these fish, which comes to be approximately 40% of the labor force used in the canning factory, when it is the same that performs the skinning operations of the tuna concerned.

In the case of the tuna loin manufacturers, where the cleaning must be especially careful, the percentage of labor force may amount to up to 80%.

From this problem derives the strong interest that the canneries and other manipulative tuna industries have to achieve a solution that enables to automate the process, with the consequent lowering of costs by eliminating such an important amount of labor force.

An attempt to solve this problem has resulted in the Spanish Invention Patent with publication number 2,166,291, consisting of a "method for skinning of tuna and other species, for the canning industry and device thereof".

This method consists in turning the fish on its own axis, hung by its tail, while a cutting blade attacking tangentially the fish, while sliding along its axis, such that fish and blade describe a movement of helical trajectory, which results in the skinning of the fish.

Regardless of the fact that this method does not provide a solution for the removal of the dark meat, it requires for its implementation that the fish is frozen, so that it is completely rigid, which means a significant complication from the point of view of handling, since such a situation of freezing must be kept, besides at very low temperatures, from the freezer of the fishing refrigerator ship to the point where there skinning is carried out, with the consequent and negative impact at the level of costs, both of the installation and the energy consumed to keep such a low temperature.

In addition the method translates into a discontinuous operation machine, since after skinning the fish replacement of such a fish by another one that is not yet skinned is required. While the machine provides two operating stations, one for skinning and another one for loading/unloading, such that while the skinning occurs in one of the stations, the unloading of the skinned fish and the loading of the not yet skinned fish occurs in the other one, there is downtime resulting from the fact that this loading/unloading operation must be performed manually, with fish weighing usually between 10 and 15 kg, which involves keeping an important manual participation, with a work that is in addition very hard for the operators.

The cited problem is so acute that despite the time elapsed since the cited Patent application this still has not been put into practice.

US2565727 discloses a tuna skinning machine, intended for skinning the fish after cooking it and its fragmentation in four loins, comprising an elongated frame, at least one longitudinal conveyor belt for dragging of the loins in alignment, conveyor belt on which a first operational phase is arranged to remove the skin, dark meat, bones and dark parts of the outside part of the loin consisting of a vertical-axis brush moving horizontally, a second tilted-axis brush, next to the horizontal and moving vertically, the brushes actuating on the skin of the loin, structure which can be repeated throughout the bed and after which a second operational phase is arranged to remove the skin, dark meat, bones and dark parts of the inside part of the loin consisting on at least two other brushes.

### DESCRIPTION OF THE INVENTION

The machine according to claim 1 resolves in a fully satisfactory manner the problems previously exposed, based on a totally different operating concept, such that the skinning of the tuna is not carried out with the fish frozen, as it was mandatory in such a Patent, but once they have been cooked and are at room temperature, prior separation of the four loins that are obtained from the fish.

The machine that is advocated, instead of skinning the tuna by cutting, as the aforementioned Patent, it does it by abrasion, with the exception of a milling operation for removal of the dark meat, which as previously mentioned the machine of the aforementioned Patent is not capable of carrying it out.

More specifically, from a suitable frame, a conveyor belt of controlled movement is installed on the same, in order to adjust the speed of the same, with which collaborates an encoder that, faithful to the transmission of the conveyor belt, generates pulses which scaled to a PLC, are transformed in millimetres of advance for such a belt.

A pair of laser generates an analog signal to the PLC according to the distance read up to the belt "height", in order to draw two curves corresponding to the loin of the tuna, whose variable profile is thus perfectly defined for the control of a set of brushes substantially cylindrical that carries out the operation of brushing and subsequent detachment of the skin.

Specifically there are motorized and moving brushes, one of vertical drive and another one of horizontal drive, whose movement is carried out by means of respective endless screws, controlled by a servo motor, as well as the conveyor belt.

As a complement to the structure described above, the machine incorporates also a cutter or crown gear, also with movement control, for removal of the dark meat.

Specifically the machine is provided to perform two successive operational phases, a first phase that could be called the skinning itself, which removes the skin, dark meat, bones and dark parts, waste disposable for lack of value, and a second phase, immediately subsequently, of a more thorough cleaning, rotating brushes being used in both phases, while the cutter for removal of the dark meat exists just in the first phase, being replaced in the second phase by a brush for disposal of the waste of the dark meat, and finally installing a lower brush for cleaning the lower face of the loin.

In this second phase the final cleaning of the loins of tuna is achieved, generating some waste, such as "bits", of less value than the loins but usable.

Through proper programming of the PLC both the speed and the direction of rotation, pressure of brushes and cutters on the loin of the tuna, etc., can be modified, where the machine works continuously, i.e. in the absence of downtime.

In addition in order to facilitate the skinning of the loins, it is intended that the flesh of the fish is cold and its skin warm, heating the latter by means of hot air steam applied to the same.

In this manner a considerably high production is achieved, with a reduction in labor force required for the skinning in the order of 70% and with a minimum loss of material, both in the form of chunks as well as bits, since the loins cross the machine supported entirely by their two fleshy faces, without changes of position such as rotation or turning over being required.

### DESCRIPTION OF DRAWINGS

To complement the description that is being made and in order to help a better understanding of the characteristics of the invention, in accordance with an exemplary preferred embodiment of the same, a set of drawings comes as an integral part of such a description, wherein illustratively and in a not limited manner, the following has been represented:
Figure 1.- It shows a front perspective schematic representation of a tuna skinning machine made in accordance with the object of the present invention, in accordance with an embodiment for the same wherein two parallel skinning and cleaning lines are defined.
Figure 2.- It shows a side view of the same machine.
Figure 3.- It shows a plan view of said machine
Figure 4.- It shows a perspective detail of a brush-motor assembly moving horizontally.
Figure 5.- It shows a similar representation to Figure 4, but corresponding to a vertical brush-motor assembly.
Figure 6.- It shows, again according to a perspective view, the two cutters assembly actuating on the two skinning lines of the machine.

### PREFERRED EMBODIMENT OF THE INVENTION

In the light of the above figures it can be observed that the machine proposed by the invention is made from a frame (1), which integrates two working lines (2, 2'), longitudinal and parallel, of simultaneous action, in each of which a conveyor belt (3) for moving loins (4) of the tuna concerned, previously obtained from fragmentation of the fish, is installed.

Conveyor belt (3) is driven by a geared motor (40) controlled from a speed regulator, to regulate the speed of it, at the expense of commands generated by a PLC, collaborating with such a geared motor an encoder (6) that relates the rotation of the motor with the advance of the conveyor belt.

A single geared motor (40) supplies the movement to the conveyor belts (3) participating in the machine.

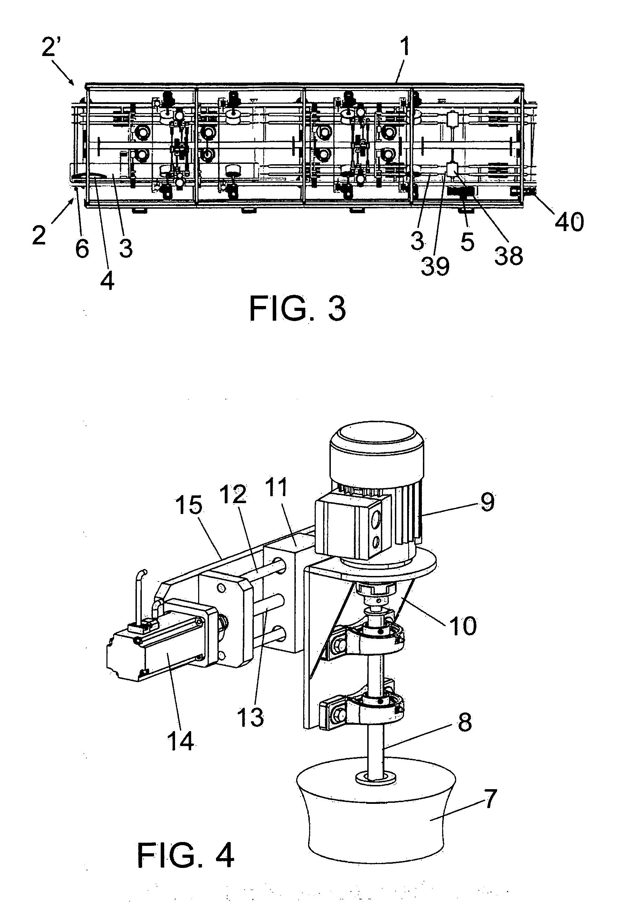

On each belt (3) a brush (7) of vertical axis (8) is installed, represented in detail in Figure 4, driven by the corresponding geared motor (9), the guide bearing of said the motor being mounted on a mobile cart (11), moving transversally on guides (12) and with the collaboration of an endless screw (13) in turn driven through a servo motor (14), mounted on a bearing (15) conveniently attached to the frame (1), such a that through said servo motor (14), brush (7) is capable of laterally distancing or approaching with respect to tuna loin (4).

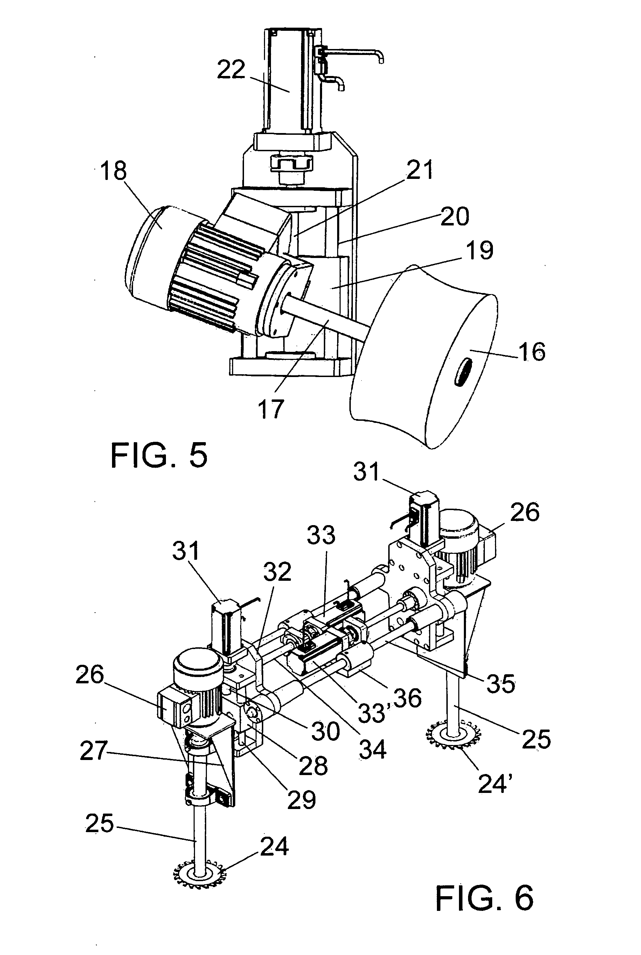

A second brush (16) actuates immediately subsequently on loins (4) of the fish, that second brush (16) having a tilted axis (17), relatively close to the horizontal, through which it receives movement from the corresponding motor (18), whose bearing (19) is mounted on guides (20), in this case vertical, as shown in Figure 5, with the collaboration of an endless screw (21) also driven by a second servo motor (22).

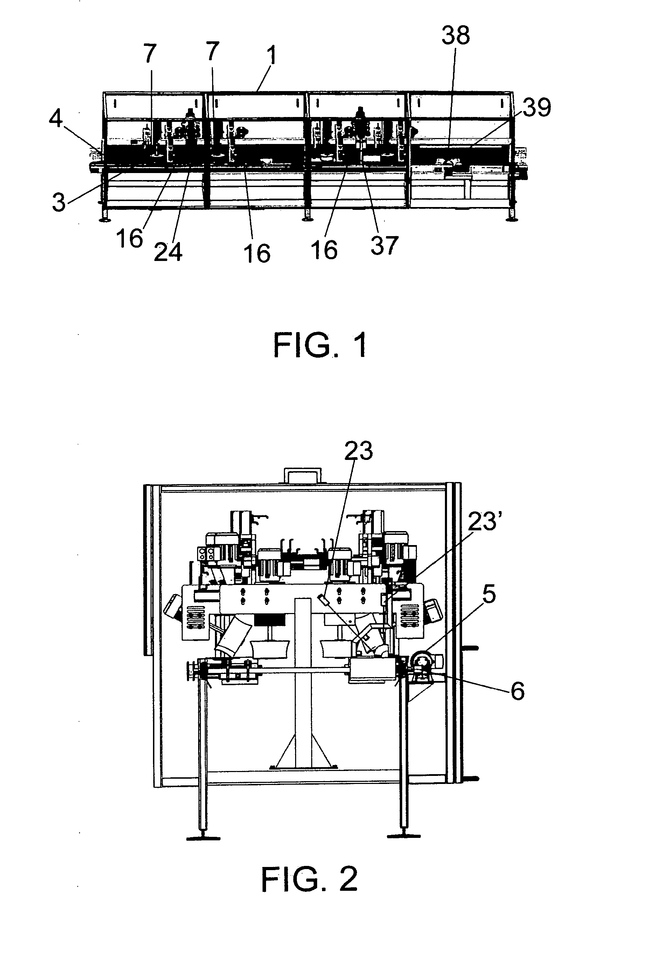

Servo motors (14 and 22) actuate for the respective brushes (7 and 16) to copy the profile of fish loin (4), through signals received by the PLC from a pair of laser (23, 23') conveniently mounted on the frame (1), as shown particularly in Figure 2.

Immediately subsequently and for each working line, i.e. in correspondence with each of the conveyor belts of the machine, corresponding cutters (24, 24') of vertical axis (25) are installed, driven by respective motors (26) mounted on bearings (27), each bearing (27) being integrally joined to a cart (28) moving vertically on guides (29) with the collaboration of a screw (30), also vertical, associated with a servo motor (31) mounted in turn on a bearing (32).

Each bearing (32) and consequently each cutter is also capable of moving horizontally with the collaboration of another servo motor (33), in this case actuating through a horizontal screw (34) on the aforementioned bearing (32), integrally joined to a pair of horizontal guides (35), common to bearings (32, 32') of both cutters (24, 24') and implemented on a common intermediate bearing (36), to which not only guides (35) but the two servo motors (33, 33') of horizontal drive are fitted.

The described structure, in what refers to brushes and cutters, can be single or can be double, depending for the first skinning phase of the machine on the level of cleaning required in each case, as occurs in the machine of the drawings, or even n-fold, without it affecting the essence of the invention.

In the second operational phase of the machine, where skinning has already been committed completely or mostly, the machine reproduces the above described structure, with the only exception that the cutters (24 - 24') are replaced by respective brushes (37), being equally driven by motors (26), which brushes (37) ensure a total removal of the dark meat.

Each working line of the machine concludes with a brush (38) for the lower cleaning of loins, intended to actuate on the lower face of the same, and consequently located in a gap (39) of the conveyor belt (3), the brushes being driven by a second geared motor (5).

## Claims

1. Tuna skinning machine, intended for skinning the fish after cooking it and its fragmentation in four loins,
**characterized in that** on an elongated frame (1), at least one longitudinal conveyor belt (3) is installed, for dragging of the loins (4) in alignment, conveyor belt on which a first operational phase is arranged to remove the skin, dark meat, bones and dark parts consisting on a vertical-axis brush (7) moving horizontally, a second tilted-axis brush (16), next to the horizontal and moving vertically and a vertical-axis cutter (24) moving horizontally are installed, the first two actuating on the skin of the loin and the cutter on the dark meat,
structure which can be repeated throughout the bed and after which a second operational phase of a more thorough cleaning is arranged in which at least two other brushes, and a third brush (37) for removal of the dark meat instead of the aforementioned cutter (24) are installed. 2.

2. Tuna skinning machine, according to claim 1, wherein each brush (7) moving horizontally is integrally joined to an axis (8) through which it receives the movement of a geared motor (9), and the bearing (10) is integrally joined to a cart (11) sliding on horizontal guides (12) by a servo motor (14) and with the collaboration of a screw (13), the servomotor (14) and the guides (12) being in turn mounted on a second bearing (15) integrally joined to a frame (1) of the machine.

3. Tuna skinning machine, according to claim 1, wherein each brush (16) moving vertically, is integrally joined to an axis (17) driven by a motor (18) mounted on a mobile cart (19) moving vertically on guides (20) and through a screw (21) driven by a servo motor (22) which, through the corresponding bearing, attaches to the frame (1) of the machine.

4. Tuna skinning machine, according to claim 1, wherein each cutter (24) is integrally joined to a vertical axis (25), which receives its movement from a motor (26) mounted on a bearing (27), associated with a cart (28) moving vertically on guides (29) with the collaboration of a screw (30) driven by a servo motor (31), mounted on the corresponding bearing (32), moving in turn on horizontal guides (35) with the collaboration of a horizontal-axis screw (34), driven in turn by a servo motor (33), mounted on a bearing (36) integrally joined to the frame (1) of the machine.

5. Tuna skinning machine, according to claims 1 and 4, wherein when two parallel operating lines are installed on its frame, the driving means of brushes (7 and 16) are independent to each other, while guides (35) for moving cutter (24) are the same for the two cutters (24, 24') mounted on an intermediate and common bearing (36), on which in turn the respective servo motors (33, 33') with their corresponding opposing screws (34) are mounted, repeating this structure for the mechanisms of mobilization of brushes (37) of removal of the dark meat.

6. Tuna skinning machine, according to previous claims, wherein the conveyor belt (3), or otherwise the conveyor belts, are assisted by an encoder (6) and a pair of laser (23, 23'), the former to control the progress of the conveyor belt and the latter to copy the variable profile of the loin of the fish, in order to provide information to a PLC that controls the movements of the different geared motors and servo motors of the machine.

7. Tuna skinning machine, according to previous claims, wherein the conveyor belt (3), or otherwise each conveyor belt, has a gap (39) near the output end, wherein a brush (38) for the lower face of the fish is placed, the conveyor belt part being located beyond such a gap (39).

## Patentansprüche

1. Die Häutungsmaschine für Tunfisch soll zum Häuten des Fischs nach dem Kochen und seine Zerlegung in vier Filets dienen und zeichnet sich durch einen länglichen Rahmen (1) aus, auf dem mindestens ein Längsförderband (3) montiert ist, um die Filets (4) hintereinander aufgereiht zu befördern; auf dem Förderband werden in einem ersten Arbeitsgang die Haut, das dunkle Fleisch, die Knochen und die dunkeln Teile entfernt; dies geschieht anhand einer um eine vertikale Achse rotierende Bürste (7), die sich horizontal bewegt, einer zweiten Bürste an einer Schwenkachse (16), die sich neben der horizontal bewegten Bürste befindet und sich vertikal bewegt, und anhand einer eine vertikale Achse umlaufenden Schneidevorrichtung (24), die sich horizontal bewegt; die beiden Bürsten bearbeiten die Filethaut, und die Schneidevorrichtung bearbeitet das dunkle Fleisch. Dieser Aufbau kann mehrmals auf dem Unterbau wiederholt werden; daran schließt ein zweiter Arbeitsgang zur gründlicheren Reinigung an, in dem wenigsten zwei weitere Bürsten und eine dritte Bürste (37) zur Entfernung des dunklen Fleisches anstelle der zuvor genannten Schneidevorrichtung (24) montiert sind.

2. Häutungsmaschine für Tunfisch gemäß Anspruch 1, bei der jede sich horizontal bewegende Bürste (7) vollständig an einer Achse (8) befestigt ist, anhand der sie durch einen Getriebemotor (9) bewegt wird; das Auflager (10) ist vollständig an einem Wagen (11) befestigt, der auf horizontalen Schienen gleitet (12), angetrieben durch einen Servomotor (14) mithilfe einer Schraube (13), wobei der Servomotor (14) und die Schienen (12) wiederum auf einem zweiten Auflager (15) montiert sind, das vollständig am Rahmen der Maschine befestigt ist.

3. Häutungsmaschine für Tunfisch gemäß Anspruch 1, bei der jede sich vertikal bewegende Bürste (16) vollständig an einer Achse (17) befestigt ist, die von einem Motor (18) angetrieben wird und auf einem mobilen Wagen (19) montiert ist, der sich vertikal auf Schienen (20) anhand einer Schraube (21) fortbewegt, angetrieben von einem Servomotor (22), der anhand des entsprechenden Auflagers am Rahmen (1) der Maschine befestigt ist.

4. Häutungsmaschine für Tunfisch gemäß Anspruch 1, bei der jede Schneidevorrichtung (24) vollständig an einer vertikalen Achse (25) befestigt ist, angetrieben von einem Motor (26), der auf einem Auflager (27) montiert ist, verbunden mit einem Wagen (28), der sich vertikal auf Schienen (29) anhand einer Schraube (30) fortbewegt, angetrieben von einem Servomotor (31), der auf dem entsprechenden Auflager (32) montiert ist und sich wiederum auf horizontalen Schienen bewegt (35), und zwar mithilfe einer sich um eine horizontale Achse drehende Schraube (34), die wiederum von einem Servomotor (33) angetrieben wird, der auf einem Auflager (36) montiert ist, das vollständig am Rahmen (1) der Maschine befestigt ist.

5. Häutungsmaschine für Tunfisch gemäß Anspruch 1 und 4, wobei, wenn zwei parallele Betriebslinien auf ihrem Rahmen installiert sind, die Antriebseinrichtungen der Bürsten (7 und 16) unabhängig voneinander sind, während die Schienen (35), auf denen sich die Schneidevorrichtung (24) bewegt, für beide Schneidevorrichtungen (24, 24') gleich und auf einem gemeinsamen Zwischenauflager (36) montiert sind, auf dem wiederum die jeweiligen Servomotoren (33, 33') mit ihren entsprechenden gegenläufigen Schrauben (34) montiert sind; diese Struktur wiederholt sich für die Mobilisierungsmechanismen der Bürsten (37) zur Entfernung des dunklen Fleisches.

6. Häutungsmaschine für Tunfisch gemäß den vorstehenden Ansprüchen, bei der das Förderband (3) oder gegebenenfalls die Förderbänder von einem Codiergerät (6) und einem Paar Laser (23, 23') unterstützt wird bzw. werden, wobei das Codiergerät die Vorwärtsbewegung des Förderbands kontrolliert, und die Laser dazu dienen, das variable Profil der Fischfilets zu kopieren und so Informationen an das Steuerungssystem zu übertragen, das die Bewegungen der einzelnen Getriebe- und Servomotoren der Maschine steuert.

7. Häutungsmaschine für Tunfisch gemäß den vorstehenden Ansprüchen, bei der das Förderband (3) oder gegebenenfalls jedes der Förderbänder eine Lücke (39) in der Nähe des ausgangsseitigen Endes aufweist, wo eine Bürste (38) für die Unterseite des Fischs platziert wird, wobei sich der Förderbandteil hinter dieser Lücke (39) befindet.

## Revendications

1. Machine de pelage de thons conçue pour peler le poisson après sa cuisson, et sa découpe en quatre filets,
**caractérisée par le fait que**, sur un cadre allongé (1), au moins un transporteur à bande longitudinal (3) est installé, pour tirer les filets (4) sur l'alignement, le transporteur à bande au niveau duquel une première étape permet de retirer la peau, la chair foncée, les arêtes et les parties foncées consistant en une brosse à axe vertical (7) à déplacement horizontal, avec une deuxième brosse à axe incliné (16), près de l'horizontale et se déplaçant verticalement et une lame à axe vertical (24) à déplacement horizontal sont installés, les deux premières agissant sur la peau du filet et la lame sur la chair foncée,
cette structure pouvant être reproduite sur toute la largeur, et ensuite, une seconde étape de nettoyage plus approfondie avec au moins deux autres brosses, et une troisième brosse (37) pour retirer la chair foncée au lieu de la lame susmentionnée (24) qui sont installées.

2. Machine de pelage de thons, conformément à la revendication 1, où chaque brosse (7) à déplacement horizontal, est entièrement raccordée à un axe (8) par lequel il reçoit le mouvement d'un motoréducteur (9), et un palier (10) est intégralement relié à un chariot (11) qui glisse sur des supports horizontaux (12) grâce à un servomoteur (14) et avec l'aide d'une visse (13), le servomoteur (14) et les supports (12) étant eux-mêmes montés sur un second palier (15) intégralement relié à un cadre (1) de la machine.

3. Machine de pelage de thons, conformément à la revendication 1, où chaque brosse (16) à déplacement vertical, est entièrement raccordée à un axe (17) entraîné par un moteur (18) monté sur un chariot mobile (19) à déplacement vertical sur des supports (20) et par le biais d'une vis (21) entraînée par un servomoteur (22) qui, avec le palier correspondant, est fixé au cadre (1) de la machine.

4. Machine de pelage de thons, conformément à la revendication 1, dont chaque lame (24) est intégralement fixée sur un axe vertical (25), qui reçoit son mouvement d'un moteur (26) monté sur un palier (27), associé à un chariot (28) à déplacement vertical sur des supports (29) avec l'aide d'une vis (30) entraînée par un servomoteur (31), monté sur le palier correspondant (32), à déplacement lui-même sur des supports horizontaux (35) avec l'aide d'une vis à axe horizontal (34), entraînée elle-même par un servomoteur (33), monté sur un palier (36) intégralement fixé au cadre (1) de la machine.

5. Machine de pelage de thons, conformément à la revendication 1 et 4, dont deux lignes parallèles sont installées sur le cadre, les modes d'entraînement des brosses (7 et 16) sont indépendants les uns des autres, et des supports (35) pour la lame mobile (24) sont identiques pour les deux lames (24, 24') montés sur un palier intermédiaire et commun (36), sur lequel, à leur tour, les servomoteurs respectifs sont montés (33, 33') avec leurs vis opposées correspondantes (34), cette structure étant reproduite pour les mécanismes de mobilisation des brosses (37) d'élimination de la chair foncée.

6. Machine de pelage de thons, conformément aux revendications antérieures, dont le transporteur à bande (3), ou les transporteurs à bandes, sont soutenus par un codeur (6) et une paire de lasers (23, 23'), le premier permettant de contrôler la progression du transporteur à bande et le second de copier le profil variable du filet de poisson afin de fournir des informations à un PLC qui contrôle les mouvements des différents motoréducteurs et servomoteurs de la machine.

7. Machine de pelage de thons, conformément aux revendications antérieures, dont le transporteur à bande (3), ou autrement chaque transporteur à bande, est doté d'un espace (39) près de la sortie, où une brosse (38) pour la partie inférieure du poisson, est placée, le transporteur à bande étant situé en dessous de cet espace (39).
